# EUROPÄISCHE PATENTSCHRIFT

(11) **EP 0 985 003 B1**
(45) Veröffentlichungstag und Bekanntmachung des Hinweises auf die Patenterteilung: **31.07.2002**
(21) Anmeldenummer: 98934830.5
(22) Anmeldetag: 26.05.1998
(51) Int. Cl.: C09D 7/00

(54) **LACKENTKLEBUNGS- UND SEDIMENTATIONSMITTEL**
AGENTS FOR UNSTICKING PAINT, AND SEDIMENTATION AGENTS
AGENTS DE DECOLLAGE DE PEINTURE ET DE SEDIMENTATION

(30) Priorität: 30.05.1997 DE 19722750
(43) Veröffentlichungstag der Anmeldung: 15.03.2000
(73) Patentinhaber: SASOL Germany GmbH, 22297 Hamburg (DE)
(72) Erfinder: MEYER, Arnold, D-25693 St. Michaelisdonn (DE); JUHL, Jens, D-25524 Itzehoe (DE); NOWECK, Klaus, D-25541 Brunsbüttel (DE)
(74) Vertreter: Schupfner, Gerhard D., Dr. Dipl.-Chem.
(86) Internationale Anmeldenummer: DE9801476
(87) Internationale Veröffentlichungsnummer: WO9854265

(56) Entgegenhaltungen:
- EP-A- 0 342 339
- FR-A- 1 206 941
- FR-A- 2 263 982

## Beschreibung

Gegenstand der Erfindung ist ein Lackentklebungs- und Sedimentationsmittel auf Basis nanokristalliner oder amorpher Tonerden und/oder Tonerdehydraten.

Bei der Aufbringung von Lacken, Wachsen oder ähnlichen, nicht wasserlöslichen organischen Substanzen enthaltendes Beschichungsmaterial gelingt es nicht immer, die Materialien restlos auf die zu beschichtenden Teile aufzubringen. Speziell bei der Lackierung von Kraftfahrzeugen fällt in den Lackspritzkabinen sogenannter "Overspray" an. Bei der Sprühlackierung von Gegenständen wie Autokarosserien in Sprühkammern oder Spritzkabinen wird der entstehende Lack- bzw. Farbnebel zur Reinigung durch einen Luftstrom mit Umlaufwasser oder einem Wasservorhang in Kontakt gebracht oder durch andere Farbnebel-Naßabscheider entfernt. Damit sich in dem Waschsystem keine klebenden Lackreste ansammeln, die z.B. die Nebelabscheider, Sprühköpfe und Umwälzpumpen verstopfen, verwendet man zum Ausfällen und Koagulieren der Lackpartikel in dem Waschwasser Lackentklebungs- und Sedimentationsmittel, die einen nichtklebenden leicht entfernbaren schlammartigen Rückstand möglichst in einem Arbeitsgang hinterlassen sollen.

Als Flockungs-, Entklebungs- oder Koagulierungsmittel sind die verschiedensten Zusätze bisher verwandt worden. Als anorganische Zusätze, die Aluminium enthalten, sind zum Beispiel bekannt: Aluminiumsilikate, Aluminiumsulfate, Aluminiumchloride, Aluminiumoxide, Aluminiumhydroxidc oder Montmorillonite. Ebenso ist eine Vielzahl von organischen Hilfsmitteln bekannt, die allein oder in Kombination mit oben genannten anorganischen Zusätzen eingesetzt werden können. Genannt seien Polyacrylamide, Polymetacrylate, Polyvinylalkohole, Polyalkylenoxide, Stärke oder Zellulose.

Die DE-A-34 21 270 beschreibt z.B. den Einsatz von Montmorilloniten oder Smectit zusammen mit Marmorkalkhydrat und Zellulose als Lackentkleber. Gemäß den US-Patentschriften 4 564 464 und 4 504 395 werden Lackentklebungsmittel für Farben mit einem hohen Feststoffanteil eingesetzt, die als wesentliche Komponente Bentonit, insbesondere Hektorit, enthalten und aus wirtschaftlichen Gründe mit Montmorillonit-Tonen oder Tonerde verschnitten sind und übliche Schaumzusätze wie Schaumdrücker und andere Koagulierungsmittel enthalten.

Alle bislang bekannten Lackentklebungsmittel haben den Nachteil, daß sie auf die verschiedenen Lacke auf Basis von Nitro, Polyacrylat, Polyester oder Polyurethan und auf Wachse verschieden ansprechen oder bei Lacken mit hohem Feststoffgehalt, den heutzutage hauptsächlich verwendeten 'High-Solids" Lacken, unwirtschaftlich sind, da sie in einer Menge bis zu 50 Gew.% , bezogen auf das Gewicht der aufgesprühten Lacke, eingesetzt werden müssen.

Die DE 38 17 251 (EP 0 342 339) hat die Verwendung von Lackentklebungsmitteln auf der Basis von Tonerde (Al₂O₃) in Pseudoböhmit- oder Böhmitform entweder in röntgenamorpher Form oder mit einer Kristallitgröße von 2 bis 15 nm vorgeschlagen. Hierbei sind im Vergleich zu Bentonit enthaltenden Präparaten sehr viel geringere Einsatzmengen erforderlich. Dieses System kann als Einkomponentensystem oder mit üblichen Entschäumern oder polymeren Entflockungsmitteln eingesetzt werden. Offenbart ist das polymere Entflockungsmittel Praestol 2415 der Firma Stockhausen (Acrylamid/Acrylat-Copolymer).

Der Erfindung liegt die Aufgabe zugrunde, ein Lackentklebungs- und Sedimentationsmittel vorzuschlagen, welches die Entklebung der heute insbesondere in der Automobilfertigung verwendeten Lacksorten auf wirtschaftliche Weise ermöglicht, einfach herzustellen ist und effektiver und schneller als bisher die Entfernung des zu entklebenden Lackes aus Wasser ermöglicht.

Die Aufgabe wird erfindungsgemäß durch eine Zusammensetzung geeignet als Lackentklebungs und/oder Sedimentationsmittel gelöst, die enthält:
(a) eine oder mehrere Aluminiumverbindungen in Form von
   - amorpher Tonerde und/oder
   - Tonerde in Pseudoböhmit- oder Böhmitform mit einer mittleren Kristallitgröße von 0,1 bis 15 nm, gemessen am 021 Reflex mittels Röntgenbeugung, und/oder
   - deren Hydrate und
(b) ein oder mehrere Hydroxyalkylpolysaccharide mit im Mittel 0,5 bis 6 Hydroxyalkyl-Gruppen pro Ring-Einheit, wobei die Hydroxyalkyl-Gruppen unabhängig voneinander 2 bis 6 Kohlenstoffatome aufweisen,
in einem Gewichtsverhältnis von 100 zu 2 bis 100 zu 20, bezogen auf das Verhältnis Gesamtaluminium, berechnet als Al₂O₃, zu Hydroxyalkylpolysaccharid.

Die oben bezeichneten Aluminiumverbindungen sind in wäßrigen Lösungen dispergierbar. Das Hydroxyalkylpolysaccharid weist bevorzugt ein mittleres Molekulargewicht von 20000 bis 800000, insbesondere 30 000 bis 120 000 g/mol auf.

1 bis 20 Gew.% der Aluminiumverbindung, berechnet als Al₂O₃ können aus hydrolisierbaren Aluminiumsalzen bestehen bzw. können in dieser Form der Zusammensetzung vor oder bevorzugt nach der Synthese der Tonerde hinzugefügt sein. Diese Aluminiumsalze sind solche Verbindungen, die in Wasser Aluminium-Valenzcn freisetzen, die ihrerseits Al-OH oder Al-O- Bindungen aufbauen, während das Gegenanion freigesetzt wird. Genannt sind Al(NO₃)₃, AlCl₃, Al₂(SO₄)₃, Al(HCOO)₃ und Al(CH₃COO)₃.

Die Zusammensetzung kann als wäßrige konzentrierte Lösung/Dispersion oder pulverförmig im wesentlichen als Trockensubstanz zur Verwendung in den Sprühkammern eingesetzt werden. Enthält die Zusammensetzung Wasser, so enthält diese vorzugsweise zu 2 bis 25 Gew.%, insbesondere 3 bis 14 Gew.% der Aluminiumverbindung, berechnet als Al₂O₃, bezogen auf das Gesamtgewicht der wäßrigen Zusammensetzung. Die wäßrige Zusammensetzung enthält insgesamt bevorzugt 3 bis 30 Gew.%, insbesondere 6 bis 25 Gew.% Trockenmasse.

Die Zusammensetzung ist als Lackentklebungs- und/oder Sedimentationsmittel geeignet einsetzbar, wobei die Zusammensetzung bevorzugt in einem Gewichtsverhältnis Zusammensetzung, bezogen auf die Trockenmasse, zu Farbe von 0,2 zu 100 bis 20 zu 100 , insbesondere 1 zu 100 bis 10 zu 100, eingesetzt wird, das heißt in einer Menge von 0,2 bis 20 Gew.%, insbesondere 1 bis 10 Gew.%, bezogen auf das Gewicht des zu entklebenden Beschichtungsmaterials. Der Verkauf und die Lagerung des Lackentklebungsmittels erfolgen zweckmäßigerweise ohne Wasser oder in konzentrierter Form. Neben Farben bzw. Lacken können auch andere Beschichtungsmaterialien wie Wachse, Korrosionsschutzmittel oder Unterbodenschutz in den oben bezeichneten Einsatzverhältnissen entklebt werden.

Das Lackentklebungsmittel ist gegenüber den verschiedensten Lacken, Farben oder anderen aufsprühbaren Beschichtungsmitteln wirksam. Das Lackentklebungsmittel kann als konzentrierte wäßrige Dispersion oder pulverförmig, jede Komponente für sich oder als fertige Zusammenstellung dem Waschwasser der Sprühkammern, Spritzkabinen oder anderweitigen Farbnebel-Naßabscheidern zugesetzt werden.

Die eingesetzten Tonerden bzw. die eingesetzten Tonerdehydrate liegen entweder in röntgenamorphem Charakter vor oder in der Pseudoböhmit- oder Böhmitstruktur und haben dann eine mittlere Kristallitgröße von 0,1 bis 15 nm, insbesondere 0,3 bis 15 nm, gemessen am 021 Reflex mittels Röntgenbeugung. Tonerdepartikel von der erfindungsgemäßen Größe sind positiv geladen und vermögen die in der Regel negativ geladenen Lackteilchen zu binden und zum Ausflocken zu bringen.

Als Pseudoböhmit wird eine Kristallform der Tonerde bezeichnet. die zwar die typischen Böhmit-Reflexe zeigt, welche allerdings aufgrund von mehr Kristallwasser leicht verschoben sind. Böhmit weist einen d-Wert von 0,611 nm. Pseudodoböhmit von größer als 0,611 nm meist jedoch unter 0,64 nm für den hkl-Reflex von 020 auf.

Die erfindungsgemäßen Tonerde/Tonerdehydrate sind in Wasser oder in Säuren dispergierbar. Die in der wässrigen Dispersion entstehenden Teilchen haben vorzugsweise eine Größe im Bereich von 5 bis 1000 nm, insbesondere 5 bis 500 nm, und liegen besonders bevorzugt mit einer Menge von größer 90 Gew.% in einem Bereich von 5 bis 100 nm vor. Die erfindungsgemäß eingesetzten Tonerde/Tonerdehydrat kann Wasser kristallographisch oder physikalisch gebunden enthalten.

Die physikalischen und chemischen Eigenschaften von Aluminiumoxidhydraten (Tonerdehydraten) hängen weitestgehend von den Verfahrensmaßnahmen bei der Herstellung ab.

Besonders bevorzugt sind die in Wasser oder Säuren dispergierbaren Tonerden/Tonerdehydrate, die durch Aluminiumalkoholat-Hydrolyse im pH-Bereich von 1 bis 11 erhalten worden sind.

Nachfolgend sind einige Verfahren zur Herstellung der erfindungsgemäßen Tonerde/Tonerdehydrate erläutert.

Zur Herstellung der wasserdispergierbaren Tonerde hydrolisiert man vorzugsweise C2- bis C10-Aluminiumalkoholate mit auf einem pH-Bereich von 1 bis 6 eingestelltem Wasser. Hierbei erhält man eine in Wasser oder verdünnten Säuren dispergierbare Tonerde. Die erhaltenen Tonerdeagglomerate lassen sich ggf. durch verdünnte Säuren wie beispielsweise Salzsäure, Salpetersäure, Essigsäure, Ameisensäure, Propionsäure, Chloressigsäure und Milchsäure und/oder die Zugabe von Aluminiumsalzen und/oder hydrothermale Alterung weiter in ihre Primärteilchen zerlegen.

Statt die erhaltenen Tonerden in Säure zu dispergieren, kann man auch die betreffenden Säuren auf die Tonerdeagglomerate aufdüsen und als in Wasser direkt dispergierbare Tonerden einsetzen. Die anfallende Tonerde kann auch durch Anlagern der gasförmigen Säuren gemäß DE-A-24 08 233 hergestellt werden. Falls elektrolytfreie Dispersionen eingesetzt werden sollen, können die hydrolysierten Tonerden auch durch Anwendung hoher Scherkräfte, wie beispielsweise mittels Kolloidmühlen, zu elektrolytfreien Dispersionen verarbeitet werden. Die durch Hydrolyse hergestellten Tonerden können bei entsprechender Behandlung auch durch Fällung aus Aluminat und Aluminiumsalzen hergestellt werden bzw. nach einem der hier vorgestellten Verfahren hergestellt sein und solche Aluminiumsalze zusätzlich enthalten, indem diese nach oder während der Herstellung der Tonerden /Tonerdehydrate zugegeben werden.. Genannt seien als Aluminiumsalze Verbindungen wie Al(NO₃)₃, AlCl₃, Al₂(SO₄)₃, Al(HCOO)₃ und Al(CH₃COO)₃.

Gemäß der DE 24 08 233-C2 kann kommerziell erhältliches säuredispergierbares Böhmit z.B. in einem Wirbelbett mit gasförmigen Säuren (z.B. Chlorwasserstoff oder NO₂) durch Begasung nachbehandelt werden. Man erhält aus solchen nachbehandelten Pulvern unter Zusatz von Wasser Dispersionen, die eine hohe Dispergierbarkeit aufweisen.

Gemäß der EP 0 505 896-A1 werden zur Herstellung wasserdispergierbaren Böhmits kommerziell erhältliche Tonerdehydrate mit unterschiedlichem kristallinen Aufbau (Aluminiumoxidmonohydrate bzw. Aluminiumoxidtrihydrate o.ä.) eingesetzt. In einem Löseprozeß reagiert die hochkristalline Aluminiumkomponente mit hohen Mengen an Salpetersäure bei niedrigen pH-Werten (unter 3,5), erhöhtem Druck und Temperatur zu böhmitischen Tonerdehydraten, die kristallin und wasserdispergierbar sind. Diese Materialien weisen allerdings meist Kristallitgrößen oberhalb von 6 nm (gemessen am 021-Reflex) auf.

Nach dem Verfahren der DE 43 37 643 (WO 95/12547) wird wasserdispergierbare amorphe oder nanokristalline Tonerde aus Aluminium-trialkoholaten oder teilsubstituierte Aluminium-mono- oder -dialkoholaten in Gegenwart von unterstöchiometrischen Mengen monovalenter anorganischer oder organischer Säuren oder deren Anhydride als Polymerisationsinhibitoren durch Hydrolyse und Polykondensation zu amorphen oder böhmitischen nanokristallinen Tonerdehydraten bei 60°C bis 110°C umgesetzt. Die Polymerisationsinhibitoren können anorganische Säuren, insbesondere Salzsäure oder HCl-Gas, Salpetersäure oder NO₂-Gas, Kohlensäure oder CO2, oder organische Säuren, insbesondere Ameisensäure, Essigsäure, Propionsäure bzw. deren Anhydride oder kurzkettige monovalente organische Säuren sein. Durch diese Verfahren wird in besonders geeigneter Weise die Kristallinität unter gleichzeitiger Beibehaltung bzw. Verbesserung der Wasserdispergierbarkeit erniedrigt. Durch Einbringen der Polymerisationsmodifikatoren kann nachhaltig cine dreidimensionale Verknüpfung der Al-OH-Gruppen unterbunden werden.

Dem so erhaltenen Tonerdehydrat kann eine weitere Menge an Säure zugesetzt werden und ggf. eine hydrothermale Nachalterung der wäßrigen Tonerdehydrat-Aufschlämmungen durchgeführt werden, die die Tonerdehydratteilchen unter Beibehaltung der Struktur so stabilisiert, daß der anschließende Trocknungsprozeß eine Aggregation der Primäragglomerate verhindert. Die Bildung größerer Primäragglomerate verschlechtert die Eigenschaftenschaftsbild der Zusammensetzung in Bezug auf die Lackentklebung.

Durch das Verfahren werden auf direktem Weg nanokristalline böhmitische Tonerdehydrate mit geringer Agglomerationsneigung der Primärteilchen und mit einer Kristallitgröße gemessen am 021-Reflex von < 4,0 nm hergestellt, die wasserdispergierbar sind und klare transluzente Dispersionen ergeben. Die EP 0 342 339-A1 und die WO 95/12547 werden hiermit ausdrücklich zum Inhalt dieser Beschreibung gemacht.

Hydroxyalkylpolysaccharide sind Polysaccharid-Derivate, die z.B. durch Umsetzung von Polysaccharid-Verbindungen mit Epoxid-Verbindungen, wie Ethylenoxid, Butylenoxid oder Propylenoxid, erhältlich sind. Sie können, bezogen auf einen Saccharid-Ring-Einheit, eine zusätzliche Hydroxyalkyl-Gruppe oder auch mehrere enthalten. Die Hydroxyalkyl-Gruppe kann nach Umsetzung mit einer Hydroxy-Gruppe des Saccharid-Ringes eine Etherbindung bilden oder auch mit einer Hydroxy-Gruppe einer bereits eingebauten Hydroxyalkyl-Gruppe einer weitere Etherbindung ausbilden. Der Einbau der Hydroxyalkyl-Gruppen erfolgt in der Regel zufällig. Vorzugsweise weisen die Hydroxyalkyl-Gruppen sekundäre Hydroxyl-Gruppen auf.

Exemplarisch sei dies an einer Glucopyranosid-Einheit der Hydroxypropylcellulose (CAS-Name Cellulose 2-hydroxypropylether, CAS RN 9004-64-2) mit drei Hydroxypropyl-Gruppen erläutert.

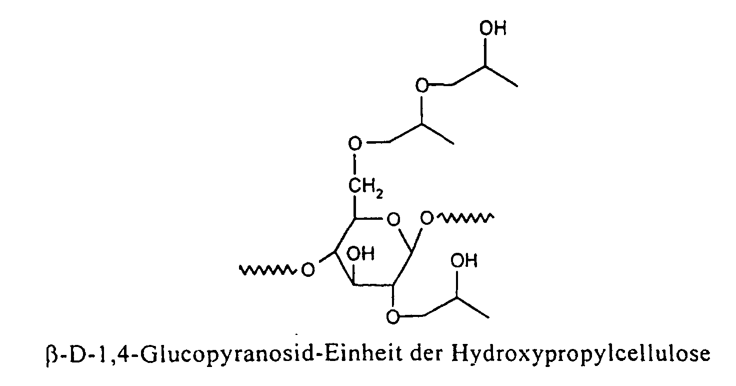

Geeignete Hydroxyalkylpolysaccharide weisen beispielsweise ein Amylopektin-, Amylose-, Dextran-, Xanthan-, Glykogen-, oder besonders bevorzugt Cellulose-Grundgerüst auf. Die Hydroxyalkylgruppe der Hydroxyalkylpolysaccharide kann 2 bis 6, vorzugsweise 2 bis 4 Kohlenstoffatome aufweiscn. Besonders bevorzugt ist Hydroxypropylcellulose.

Die erfindungsgemäßen Lackentklebungsmittel können weiterhin wie oben ausgeführt z.B. 0 bis 10 Gew.% und vorzugsweise 3 bis 6 Gew.% Säuren wie Salzsäure, Salpetersäure, Ameisensäure, Essigsäure, Milchsäure, Chloressigsäure und/oder Propionsäure enthalten, die als Gegenion die entsprechend äquivalente Menge Aluminiumionen oder Tonerde beanspruchen. Gegebenenfalls können die Lackentklebungsmittel weiterhin übliche Schaumdrücker oder andere polymere Flokkungsmittel enthalten.

### Versuchsbeispiele

In einer Mischapparatur wurden 500 ml Wasser und 5 ml des zu entklebenden Lackes eingefüllt. Es wurde 5 min intensiv gerührt. 100 ml dieser Mischung wurden in ein zylindrisches Polyethylengefäß von 130 ml Inhalt, versehen mit Deckel, eingefüllt. Der Mischung wurden 0,2 ml 7,5% Al₂O₃-haltige Lackentklebungsmittel-Dispersion zugesetzt.

Das Gefäß wurde mit einer Drehzahl von 60 U/min 30 Min kopfüber gedreht und anschließend aus der Drehapparatur entnommen. Nach 5 min Standzeit wurde die Sedimenthöhe des entklebten Lackes als Niederschlag in mm gemessen. Nach 10 min und 30 min Standzeit wurde aus dem Gefäß von oben Flüssigkeit abpipettiert. Die Transmission dieser Flüssigkeit wurde mit einem Photometer in einer 1 cm Küvette bei einer Wellenlänge von 450 nm ermittelt. Aus beiliegender graphischer Darstellung und Tabelle ist die Wirkung der entsprechenden Lackentklebungsmittel abzulesen.

Lackentklebungsmittel-Zusammensetzungen, jeweils in wäßriger Lösung; enthaltend:

| Lackentklebungsmittel 1 (Vergleichsbeispiel) | |
|---|---|
| Sol P3 Tonerde | 7,5 Gew.% (als Al₂O₃) |

| Lackentklebungsmittel 2 | |
|---|---|
| Sol P3 Tonerde | 7 Gew.% (als Al₂O₃) |
| Aluminium-Nitrat | 1,05 Gew.% (bez. auf die eingesetzte Mange Al(NO₃)₃x9H₂O entspricht 0.25 Gew.% als Al₂O₃) |
| Hydroxypropylcellulose | 0,5 Gew.% (Klucel® EF) |

| Lackentklebungsmittel 3 | |
|---|---|
| Tonerde | 7,5 Gew.% (als Al₂O₃) |
| Hydroxypropylcellulose | 0,5 Gew.% (Klucel® EF) |

Die Tonerde Sol P3 wurde von der RWE-DEA AG für Mineraloel und Chemie nach dem Verfahren der DE 43 37 643 hergestellt und ist kommerziell erhältlich. Die Tonerde des Lackentklebungsmittel 3 wurde durch Hydrolyse von 250 g 6,4 Gew.% Aluminiumhexanolat-Lösung in Hexanol bei 90°C in 500 ml einer 2,78 % Salpetersäure erhalten. Es resultierte ein röntgenamorphes Pulver mit 50,5 Gew.% Aluminiumoxid und 22,7 Gew.% Nitratgehalt. Nach der Phasentrennung wurde die wäßrige Phase sprühgetrocknet.

Klucel ® EF ist ein Handelsprodukt der Aqualon und weist ein mittels der Größenausschlußchromatographie (SEC) gemessenes mittleres Molekulargewicht (Gewichtsmittel) von 80.000 g/mol auf.

**Tabelle**

| Lackentklebungsmittel | Transmission [%] | | Niederschlag [mm] |
|---|---|---|---|
| nach | 10 min | 30 min | 5 min |
| **1** | 2 | 14 | 7 |
| **2** | 36 | 49 | 15 |
| **3** | 60 | 70 | 10 |

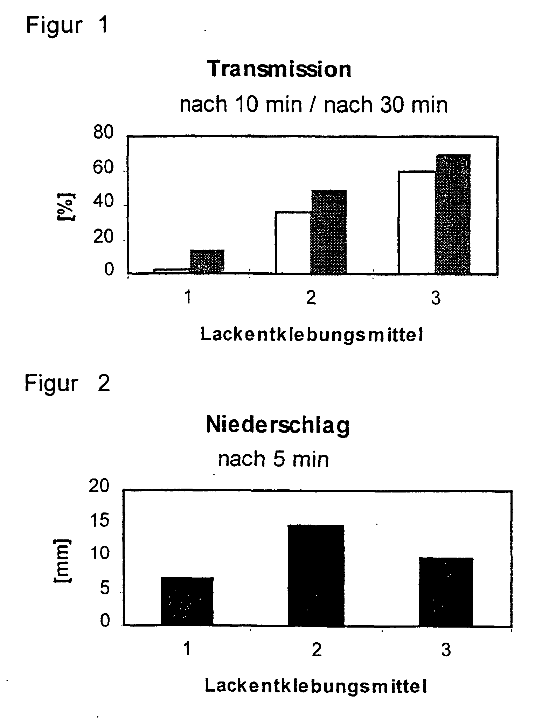

## Patentansprüche

1. Zusammensetzung geeignet als Lackentklebungs- und/oder Sedimentationsmittel enthaltend:
(a) eine oder mehrere Aluminiumverbindungen in Form von
- amorpher Tonerde und/oder
- Tonerde in Pseudoböhmit- oder Böhmitform mit einer mittleren Kristallitgröße von 0,1 bis 15 nm, gemessen am 021 Reflex mittels Röntgenbeugung, und/oder
- deren Hydrate und
(b) ein oder mehrere Hydroxyalkylpolysaccharide mit im Mittel 0,5 bis 6 Hydroxyalkyl-Gruppen pro Ring-Einheit, wobei die Hydroxyalkyl-Gruppen unabhängig voneinander 2 bis 6 Kohlenstoffatome aufweisen,
in einem Gewichtsverhältnis von 100 zu 2 bis 100 zu 20, bezogen auf das Verhältnis Gesamtaluminium, berechnet als Al₂O₃, zu Hydroxyalkylpolysaccharid.

2. Zusammensetzung gemäß Anspruch 1, **dadurch gekennzeichnet, daß** das Hydroxyalkylpolysaccharid Hydroxypropylcellulose ist.

3. Zusammensetzung gemäß Anspruch 1 , **dadurch gekennzeichnet, daß** die Hydroxyalkylpolysaccharide ein mittleres Molekulargewicht von 20000 bis 800 000 aufweisen.

4. Zusammensetzung gemäß einem der vorhergehenden Ansprüche, **dadurch gekennzeichnet, daß** 1 bis 20 Gew.% der Aluminiumverbindung, berechnet als Al₂O₃, aus einem hydrolisierbaren Aluminiumsalz bestehen bzw. in dieser Form der Zusammensetzung hinzugefügt sind

5. Zusammensetzung gemäß einem der vorhergehenden Ansprüche, **dadurch gekennzeichnet, daß** diese zusätzlich Wasser enthält.

6. Zusammensetzung gemäß Anspruch 5, **dadurch gekennzeichnet, daß** diese 2 bis 25 Gew.% der Aluminiumverbindung, berechnet als Al₂O₃, in wäßriger Lösung/Dispersion enthält.

7. Zusammensetzung gemäß Anspruch 5 oder 6, **dadurch gekennzeichnet, daß** die wäßrige Zusammensetzung 3 bis 30 Gew.% Trockenmasse enthält.

8. Verwendung der Zusammensetzung gemäß einem der vorhergehenden Ansprüche als Lackentklebungs- und/oder Sedimentationsmittel.

9. Verwendung der Zusammensetzung als Lackentklebungs- und/oder Sedimentationsmittel gemäß Anspruch 8, wobei die Zusammensetzung in einem Gewichtsverhältnis Zusammensetzung, bezogen auf die Trockenmasse, zu entklebenden Beschichtungsmaterial von 0,2 zu 100 bis 20 zu 100 eingesetzt wird.

## Claims

1. Composition suitable as a paint detackifier and/or sedimentation agent containing
(a) one or more aluminium compound(s) in the form of
- amorphous alumina and/or
- pseudoboehmite- or boehmite-type alumina having an average crystallite size of from 0.1 to 15 nm, measured by X-ray diffraction on the 021 reflex, and/or
- the hydrates thereof and
(b) one or more hydroxyalkyl polysaccharide(s), having 0.5 to 6 hydroxyalkyl groups per ring unit on the average, where the hydroxy-alkyl groups, independently of one another, have 2 to 6 carbon atoms,
with a weight ratio ranging from 100 : 2 to 100 : 20, based on the ratio of total aluminium, calculated as Al₂O₃, to hydroxyalkyl polysaccharide.

2. Composition according to claim 1,
**characterized in that** the hydroxyalkylpolysaccharide is hydroxypropyl cellulose.

3. Composition according to claim 1,
**characterized in that** the hydroxyalkylpolysaccharides have an average molecular weight of from 20000 to 800000 g/mol.

4. Composition according to any one of the preceding claims,
**characterized in that** 1 to 20 wt.% of the aluminium compound, calculated as Al₂O₃, consist of a hydrolyzable aluminium salt or were added in this form to the composition.

5. Composition according to any one of the preceding claims,
**characterized in that** said composition additionally contains water.

6. Composition according to claim 5,
**characterized in that** said composition contains 2 to 25 wt.% of the aluminium compound, calculated as Al₂O₃, as an aqueous solution/dispersion.

7. Composition according to claim 5 or 6,
**characterized in that** the aqueous composition con-tains 3 to 30 wt.% dry mass.

8. Use of said composition according to any one of the preceding claims as a paint detackifier and/or sedimentation agent.

9. Use of said composition as a paint detackifier and/or sedimentation agent according to claim 8, wherein the composition is employed in a weight ratio of composition, based on dry mass, to coating material to be detackified of from 0.2 : 100 to 20 : 100.

## Revendications

1. Composition convenant comme agent de décollage de laque et/ou de sédimentation, contenant
(a) un ou plusieurs composés de l'aluminium sous forme
- d'alumine amorphe et/ou
- d'alumine sous forme de pseudoboehmite ou de boehmite présentant une taille moyenne des cristaux de 0,1 à 15 nm, mesurée sur un système 021 Reflex au moyen de la diffraction de rayons X et/ou
- leurs hydrates et
(b) un ou plusieurs hydroxyalkylpolysaccharides présentant en moyenne 0,5 à 6 groupements hydroxyle par unité cyclique, les groupements hydroxyle présentant indépendamment les uns des autres 2 à 6 atomes de carbone,
dans un rapport pondéral de 100:2 à 100:2, portant sur le rapport aluminium total, calculé sous forme de Al₂O₃, à hydroxyalkylpolysaccharide.

2. Composition selon la revendication 1, **caractérisée en ce que** l'hydroxyalkylpolysaccharide est de l'hydroxypropylcellulose.

3. Composition selon la revendication 1, **caractérisée en ce que** les hydroxyalkylpolysaccharides présentent un poids moléculaire moyen de 20000 à 800000.

4. Composition selon l'une quelconque des revendications précédentes, **caractérisée en ce que** 1 à 20% en poids du composé d'aluminium, calculé sous forme de Al₂O₃, sont constitués d'un sel d'aluminium hydrolysable ou, selon le cas, sont ajoutés sous cette forme à la composition.

5. Composition selon l'une quelconque des revendications précédentes, **caractérisée en ce que** celle-ci contient de l'eau en supplément.

6. Composition selon la revendication 5, **caractérisée en ce que** celle-ci contient 2 à 25% en poids du composé d'aluminium, calculé sous forme d'Al₂O₃, en solution/dispersion aqueuse.

7. Composition selon les revendications 5 ou 6, **caractérisée en ce que** la composition aqueuse contient 3 à 30% en poids de masse sèche.

8. Utilisation de la composition selon l'une quelconque des revendications précédentes comme agent de décollage de laque et/ou de sédimentation.

9. Utilisation de la composition comme agent de décollage de laque et/ou de sédimentation selon la revendication 8, la composition étant utilisée dans un rapport pondéral composition, par rapport à la masse sèche, à matériau de revêtement à décoller de 0,2:100 à 20:100.
